# EUROPEAN PATENT SPECIFICATION

(11) **EP 2 359 939 B1**
(45) Date of publication and mention of the grant of the patent: **26.02.2014**
(21) Application number: 11166587.3
(22) Date of filing: 05.03.2008
(51) Int. Cl.: B05B 13/04, B05B 15/12, B25J 5/02, B25J 9/00

(54) **Painting system**
Lackieranlage
Installation de peinture

(30) Priority: 08.03.2007 JP 2007058231; 20.07.2007 JP 2007189428
(43) Date of publication of application: 24.08.2011
(62) Divisional of application: 08721362.5
(73) Proprietor: Kabushiki Kaisha Yaskawa Denki, Kitakyushu-Shi Fukuoka 806 (JP)
(72) Inventor: Yoshino, Katsuhiko, Kitakyushu-Shi Fukuoka 806-0004 (JP); Takahashi, Shingi, Kitakyushu-Shi Fukuoka 806-0004 (JP)
(74) Representative: Gendron, Vincent Christian

(56) References cited:
- EP-A1- 1 609 532
- WO-A1-03/021519
- FR-A1- 2 806 012
- GB-A- 2 114 024
- US-A- 4 955 250
- US-A1- 2006 292 308

## Description

### Technical Field

The present invention relates to a painting system that paints automobiles using painting robots in a painting booth.

### Background Art

Among existing painting systems, a type of painting system having a painting robot and a door opening/closing robot disposed on two travel guide rails provided at different heights on a side wall of a painting booth has been proposed (see, for example, Patent Document 1 and Patent Document 2).

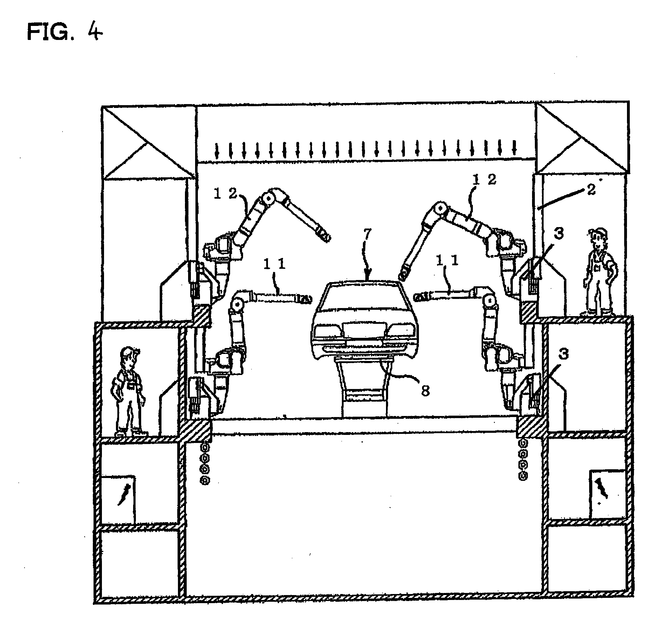

Referring to Fig. 4, a first example of existing painting systems is described. An automotive body 7 is placed on a conveyer 8 and moved to a painting booth 2. Travel guide rails 3 are attached to side walls of the painting booth 2. Door opening/closing robots 11 and painting robots 12 are attached to the travel guide rails 3 so as to paint the automotive body 7. The door opening/closing robots 11 and the painting robots 12 are attached to the travel guide rails 3 disposed at different heights in the vertical direction so that the door opening/closing robots 11 and painting robots 12 can pass each other without interfering with each other. In this example of the existing art, the painting robots 12 are disposed on the travel guide rails 3 in an upper level, and the door opening/closing robots 11 are disposed on the travel guide rails 3 in a lower level.

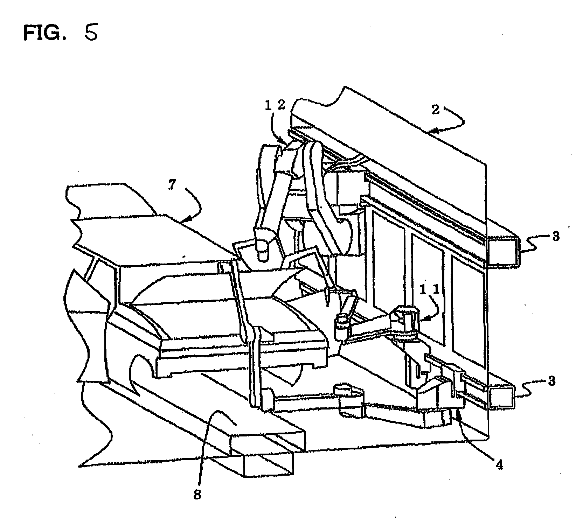

Referring to Fig. 5, a second example of existing painting systems is described. An automotive body 7 is placed on a conveyer 8 and moved to a painting booth. Travel guide rails 3 are attached to a side wall of the painting booth. Door opening/closing robots 4, 11 and a painting robot 12 are attached to the travel guide rails so as to paint the automotive body 7. The door opening/closing robots 4, 11 and the painting robot 12 are attached to the travel guide rails 3 provided at different heights in the vertical direction so that the door opening/closing robots 4, 11 and the painting robot 12 can pass each other without interfering with each other. In this example, the painting robot 12 is disposed on a travel guide rail 3 in an upper level, and the door opening/closing robots 4,11 are disposed on the travel guide rail 3 in a lower level.
[Patent Document 1] WO2001/68267
[Patent Document 2] WO2005/46880

Further painting systems are known from WO 03/021519 and from US 2006/0292308. Document US 4955250 describes a multiple axis robot arm.

### Disclosure of Invention

### Problems to be Solved by the Invention

For a painting system, reduction of the size of a painting booth and reduction of the number of robots have been desired. While painting is being performed, the painting booth is usually air conditioned such that air flows downward. A large painting booth requires a high flow rate, which causes a problem of high operating costs for air-conditioning equipment. Therefore, there has been a trend toward reducing the size of the painting booth so as to reduce the operating costs for the air-conditioning equipment.

In order to reduce the size of the painting booth, either the number of robots has to be reduced or the robots have to be disposed with high density. In order to paint an automotive body, two door opening/closing robots and a painting robot are necessary, as disclosed in the example of the existing painting systems. The robots are disposed in upper and lower levels, so that the robots are disposed with high density.

However, existing painting systems have the following problems. First, with a structure in which a painting robot is disposed on a travel guide rail in an upper level and a door opening/closing robot is disposed on a travel guide rail in a lower level, paint ejected from the painting robot is sprayed onto an automotive body and, in addition, as air flows downward in the painting booth, paint that is not sprayed onto the automotive body may adhere to the door opening/closing robot in the lower level. In such a case, a problem occurs in that a wrong color may adhere to a door when an opening/closing section of the door opening/closing robot contacts the door. In order to prevent the adherence of a wrong color, daily maintenance is necessary, which causes a problem of serviceability. Moreover, during a continuous painting process, it is necessary to check whether a smear is spreading on the opening/closing section of the door opening/closing robot and perform maintenance so as to remove the smear. A downtime required for the maintenance may interrupt a continuous painting process of several hundred vehicle bodies, which causes a problem of lowered productivity.

Second, an example of existing painting systems is described to have a structure in which one painting robot and two door opening/closing robots are disposed on a wall on one side of a painting booth. In order to paint the inside of a door, a trunk, and a front body with one painting robot, the painting robot should have a longest degree of extension that enables painting of the trunk and the front body, which requires a considerably long arm length. On the other hand, in order to paint the door, the painting robot may have to retract an arm to such an extent that it is outside the range of motion. Consequently, a large distance between the automotive body and the wall of the painting booth is required. Thus, the painting booth has to be large and air-conditioning equipment has to have a high flow rate, which causes a problem in that a desired painting system cannot be provided. Even if the arm can be moved so that the arm can paint the door, performing painting with one robot requires a long time, which causes a problem in that productivity is reduced. In this case, the existing painting system supposedly employs an additional painting robot so as to effectively perform painting operations. However, this contradicts an original object of reducing the number of robots, which causes a problem in that a desired painting system is not provided.

The present invention, which has been achieved so as to address these problems, provides a painting system that optimizes the number and the disposition of robots in a painting booth and thereby improves productivity.

### Means for Solving the Problems

To solve the problem, the present invention provides a painting system according to the claims.

### Advantages

According to the invention, the following advantages are gained.

First, the disposition and the number of the robots are optimized, so that the size of the painting booth and the size of the air-conditioning equipment are reduced.

The opener robot and the door opening/closing/painting robot are disposed in the upper level and the painting robot is disposed in the lower level of the travel guide rail, so that, even when air flows downward in the painting booth, the opening/closing section that opens and closes a trunk and a door is prevented from being painted and a wrong color is prevented from adhering to the article, which eliminates maintenance and realizes continuous painting of the articles.

The door opening/closing/painting robot is disposed in the upper level of the travel guide rail and the painting robot is disposed in the lower level, so that a door and a trunk are painted with a plurality of robots, which reduces painting time. The door opening/closing/painting robot performs a door opening/closing function and a painting function, so that the number of robots is reduced.

The painting robot, the door opening/closing/painting robot, and the opener robot are disposed on the travel guide rails provided on the side walls of the painting booth in positions facing each other or in positions point-symmetric about the article, and the robots in the facing positions and the robots in the point-symmetric positions respectively operate in synchronization, so that painting time can be reduced.

The door opening/closing robot and the painting robot are disposed above the travel guide rail, so that the amount of paint adhering to a traveling device and the painting robot can be reduced and the paint quality can be improved.

The painting robot is disposed above an article, so that the width of the painting booth and the size of air-conditioning equipment can be reduced. Six-axis articulated arm robots are disposed above and below a base mounted on a traveling device, so that a required height of the booth can be reduced. The painting robot is disposed above the travel guide rail, so that the amount of paint that adheres to the traveling device is reduced and thereby painting quality is improved.

### Brief Description of Drawings

[Fig. 1] Fig. 1 is a front view of a painting system according to an embodiment of the present invention.
[Fig. 2] Fig. 2 is a top view of a painting system according to the embodiment of the present invention.
[Fig. 3] Fig. 3 is a perspective view of a wrist of the door opening/closing/painting robot according to the embodiment of the present invention.
[Fig. 4] Fig. 4 is front view of a first example of existing painting systems.
[Fig. 5] Fig. 5 is perspective view of a second example of existing painting systems.

### Reference Numerals

- 1: painting system
- 2: painting booth
- 2a: floor
- 3: travel guide rail
- 4: trunk opener
- 5: door opening/closing/painting robot
- 51: painting gun
- 52: opening/closing means
- 53: fixed base
- 5a: base
- 5b: rotating base
- 5c: rotating base
- 5d: first arm
- 5e: second arm
- 5f: first wrist
- 5g: third arm
- 5h: fourth arm
- 5i: second wrist
- 6: trunk painting robot
- 7: automotive body
- 70: first axis
- 71: second axis
- 72: third axis
- 73: seventh axis
- 74: eighth axis
- 75: ninth axis
- 8: conveyer line
- 91: engine hood
- 92: back trunk
- 11: door opening/closing robot
- 12: painting robot
- 15: door

### Best Modes for Carrying Out the Invention

Hereinafter, embodiments of the present invention are described with reference to the drawings.

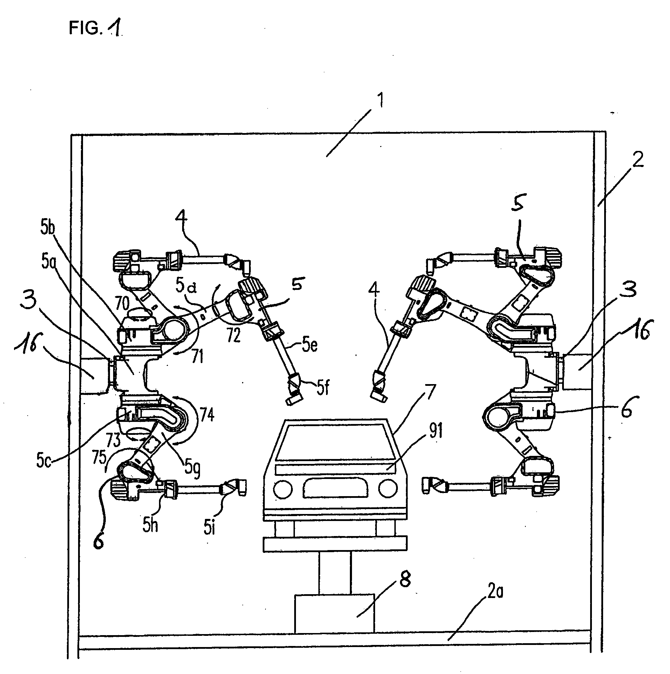

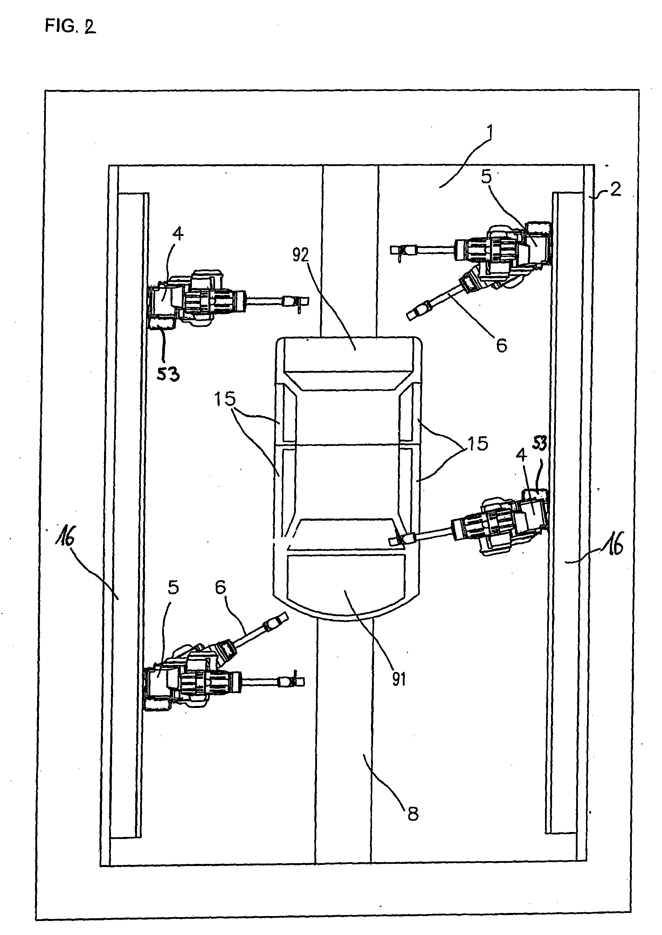

Fig. 1 is a front view of a painting system according to the present invention, and Fig. 2 is a top view of the painting system according to the present invention. A painting system 1, a painting booth 2, travel frames 16, guide rails 3, trunk opener robots 4, door-opening/closing/painting and trunk-painting robots 5 and 6, an automotive body 7 and a conveyer line 8 are shown.

According to the present invention, the travel frames 16 are disposed in upper parts of the walls of the painting booth 2, and the guide rails 3 are provided. On the travel guide rails 3, the trunk openers 4 and the door-opening/closing/painting and trunk-painting robots 5 and 6 are disposed. The door-opening/closing/painting and trunk-painting robots 5 and 6 and the trunk openers 4 are disposed on both sides of the automotive body 7 with respect to the traveling direction so as to be point-symmetric about the automotive body 7. None of the trunk openers 4 and the door-opening/closing/painting and trunk-painting robots 5 and 6 is disposed near a floor 2a of the painting booth 2.

In the painting system 1 of the invention, the automotive body 7 is mounted on the conveyer line 8, and the travel frames 16 are disposed in the upper parts (above the upper half of the article to be painted) of the side walls of the painting booth 2 on both sides with respect to the traveling direction of the automotive body. The guide rail 3 is provided on the travel frame 16, and the trunk opener 4 and the door-opening/closing/painting and trunk-painting robots 5 and 6 are movably disposed on the guide rail 3.

In a similar manner, the guide rail 3 is provided on the travel frame 16 on the other side wall of the painting booth 2, and the trunk opener 4 and the door-opening/closing/painting and trunk-painting robots 5 and 6 are movably disposed on the guide rail 3. Regarding the disposition of the robots on the travel frame 16, the trunk openers 4 and the door-opening/closing/painting and trunk-painting robots 5 and 6 are disposed so as to be point-symmetric about the automotive body 7.

The trunk openers 4 are attached to the guide rails 3 via fixed bases 53 provided on the travel frames 16.

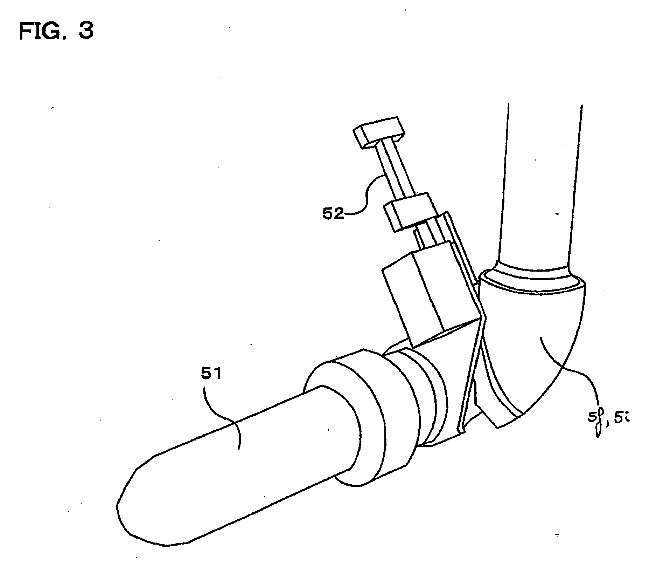

The door-opening/closing/painting and trunk-painting robots 5 and 6 have a common base 5a that is attached to the guide rail 3. A first rotating base 5b is attached to the common base 5a so as to be rotatable around a first axis 70 that is vertical. One end of a first arm 5d is attached to the first rotating base 5b so as to be rotatable around a second axis 71 that is horizontal. One end of a second arm 5e is attached to the other end of the first arm 5d so as to be rotatable around a third axis 72 that is parallel to the second axis 71. A first wrist 5f is attached to the other end (fourth to sixth axes are not shown), so that a door opening/closing/painting robot 5 is provided. A second rotating base 5c is attached to the common base 5a so as to be rotatable around a seventh axis 73 that is vertical. One end of a third arm 5g is attached to the second rotating base 5c so as to be rotatable around an eighth axis 74 that is horizontal. One end of a fourth arm 5h is attached to the other end of the third arm 5g so as to be rotatable around a ninth axis 75 that is parallel to the eighth axis 74. To the other end, a second wrist 5i (tenth to twelfth axes are not shown) is attached, so that a trunk painting robot 6 is provided. As shown in Fig. 3, opening/closing means 52 having a hook on its wrist is attached to each of the wrists 5f, 5i, and a painting gun 51 is attached to an end of each of the wrists. With this structure, paint from the painting gun 51 does not adhere to the opening/closing means 52.

The painting process is described using a four-door automotive body 7. First, the two trunk openers 4 open an engine hood 91 in the front of the automotive body 7 with respect to the traveling direction and a back trunk 92 of the automotive body 7 with respect to the traveling direction, and the two door opening/closing/painting robots 5 open doors 15 on both sides in the front of the automotive body 7.

Next, the two trunk painting robots 6 paint the inside of the engine hood 91 and the back trunk 92 in the back, while maintaining their positions point-symmetric about the automotive body. The two door opening/closing/painting robots 5 paint the inside of the doors 15 while maintaining their positions facing each other.

Next, the two door opening/closing/painting robots 5 close the doors 15. The trunk openers 4 close the engine hood 91 and the back trunk 92.

Next, the two door opening/closing/painting robots 5 open the doors 15 in the back of the automotive body 7 and paint the inside of the doors while maintaining their positions facing each other.

Lastly, the two door opening/closing/painting robots 5 close the doors 15 in the back so as to finish the painting process, and the robots move to their initial positions.

The positions of the robots are detected with a controller (not shown) in synchronization with the movement of the conveyer line 8 that conveys the automotive body 7, so that the robots can move to painting positions or door opening/closing positions on the travel guide rails 3.

Heretofore, it has been described that the painting robot and the trunk opener are disposed in positions point-symmetric about the automotive body. However, it is not necessary that the positions be strictly point-symmetric. It is intended that the robots be disposed on opposite sides near the ends of the automotive body. It is sufficient that the positions be substantially point-symmetric, as in a relationship between the back trunk and the engine hood.

In the description of the present invention, painting of the inside of the automotive body is mainly described. However, it is needless to say that a surface of the automotive body can be painted.

### Industrial Applicability

According to the present invention, a painting system for painting an automotive body is described. However, the painting system is applicable to general components and to a sealing system, which has a similar process.

## Claims

1. A painting system for painting an article such as an automotive body (7), the painting system including:
a painting booth (2) that is sealed,
a conveyer (8) for transporting the article through the painting booth,
**characterized in that** it comprises:
a travel frame (16) disposed on a side of the conveyer and extending along the conveyer,
a travel guide rail (3) provided on the travel frame (16) to extend along the conveyer,
a common base (5a) connected to the travel guide rail (3) to be movable along the travel guide rail (3),
a first and second rotating base (5b, 5c) respectively provided on each of the top and bottom of the common base (5a) so as to be rotatable around a vertical axis (70, 73),
a first upper robot (5) movably mounted on the travel guide rail (3) through a first arm (5d) of said upper robot (5) whose end is attached to the first rotating base (5b) so as to be rotatable around a first horizontal axis (71); and
a lower robot (6) movably mounted on the travel guide rail (3) through a first arm (5g) of said lower robot (6) whose end is attached to the second rotating base (5c) so as to be rotatable around a second horizontal axis (74).

2. The painting system according to Claim 1, **characterized in that** it comprises a second upper robot (4) movably mounted on the travel guide rail (3) via a fixed base (53) connected to the travel guide rail (3) to be movable along the travel guide rail (3).

3. The painting system according to Claim 2, **characterized in that** the second upper robot (4) is an opener robot configured to open an engine hood of the automotive body and the lower robot (6) is a painting robot configured to paint inner surfaces of the engine hood while the first upper robot (5) is a door opening/closing/painting robot configured to open and close a door of the automotive body and to paint the inside of the door.

4. The painting system according to anyone of preceding claims, **characterized in that** the travel frame (16) on which is mounted the travel guide rail (3) is disposed in the upper part of a side wall of the painting booth (2) above the upper half of the article to be painted.

## Patentansprüche

1. Lackiersystem bzw. Anlage zum Lackieren eines Artikels, wie etwa einer Fahrzeugkarosserie (7), wobei die Lackieranlage umfasst:
eine Lackierkabine (2), die abgedichtet ist,
einen Förderer (8) zum Transportieren des Artikels durch die Lackierkabine,
**dadurch gekennzeichnet, dass** es bzw. sie umfasst:
einen Bewegungsrahmen (16), der auf einer Seite des Förderers angeordnet ist und sich entlang des Förderers erstreckt,
eine Wegführungsschiene (3), die derart auf dem Bewegungsrahmen (16) bereitgestellt ist, dass sie sich entlang des Förderers erstreckt,
eine gemeinsame Basis (5a), die mit der Wegführungsschiene (3) verbunden ist, so dass sie entlang der Wegführungsschiene (3) beweglich ist,
eine erste und zweite rotierende Basis (5b, 5c), die jeweils auf der Ober- und Unterseite der gemeinsamen Basis (5a) bereitgestellt ist, so dass sie um eine vertikale Achse (70, 73) drehbar ist,
einen ersten oberen Roboter (5), der durch einen ersten Arm (5d) des oberen Roboters (5), dessen Ende an der ersten rotierenden Basis (5b) befestigt ist, so dass er um eine erste horizontale Achse (71) drehbar ist, beweglich auf der Wegführungsschiene (3) montiert ist; und
einen unteren Roboter (6), der durch einen ersten Arm (5g) des unteren Roboters (6), dessen Ende an der zweiten rotierenden Basis (5c) befestigt ist, so dass er um eine zweite horizontale Achse (74) drehbar ist, beweglich auf der Wegführungsschiene (3) montiert ist.

2. Lackieranlage nach Anspruch 1, **dadurch gekennzeichnet, dass** sie einen zweiten oberen Roboter (4) umfasst, der über eine feste Basis (53), die mit der Wegführungsschiene (3) verbunden ist, beweglich auf der Wegführungsschiene (3) montiert ist, um entlang der Wegführungsschiene (3) beweglich zu sein.

3. Lackiersystem nach Anspruch 2, **dadurch gekennzeichnet, dass** der zweite obere Roboter (4) ein Öffnungsroboter ist, der aufgebaut ist, um eine Motorhaube der Fahrzeugkarosserie zu öffnen, und der untere Roboter (6) ein Lackierroboter ist, der aufgebaut ist, um Innenoberflächen der Motorhaube zu lackieren, während der erste obere Roboter (5) ein Türöffnungs-/Schließ-/Lackierroboter ist, der aufgebaut ist, um eine Tür der Fahrzeugkarosserie zu öffnen und zu schließen und um das Innere der Tür zu lackieren.

4. Lackiersystem nach einem der vorhergehenden Ansprüche, **dadurch gekennzeichnet, dass** der Bewegungsrahmen (16), auf dem die Wegführungsschiene (3) montiert ist, in dem oberen Teil einer Seitenwand der Lackierkabine (2) oberhalb der oberen Hälfte des Artikels, der lackiert werden soll, angeordnet ist.

## Revendications

1. Dispositif de peinture destiné à peindre un objet tel qu'une carrosserie de véhicule automobile (7), le dispositif de peinture comportant :
une cabine de peinture (2) qui est étanche,
un convoyeur (8) destiné à transporter l'objet à travers la cabine de peinture,
**caractérisé en ce qu'**il comprend :
un châssis de déplacement (16) agencé sur un côté du convoyeur et s'étendant le long du convoyeur,
un rail de guidage de déplacement (3) agencé sur le châssis de déplacement (16) de manière à s'étendre le long du convoyeur,
une base commune (5a) reliée au rail de guidage de déplacement (3) de manière à pouvoir être déplacée le long du rail de guidage de déplacement (3),
des première et seconde bases tournantes (5b, 5c) agencées respectivement sur chacune des parties supérieure et inférieure de la base commune (5a) de manière à pouvoir tourner autour d'un axe vertical (70, 73),
un premier robot supérieur (5) monté de manière à pouvoir se déplacer sur le rail de guidage de déplacement (3) par l'intermédiaire d'un premier bras (5d) dudit robot supérieur (5) dont l'extrémité est fixée sur la première base tournante (5b) de manière à pouvoir tourner autour d'un premier axe horizontal (71) ; et
un robot inférieur (6) monté de manière à pouvoir se déplacer sur le rail de guidage de déplacement (3) par l'intermédiaire d'un premier bras (5g) dudit robot inférieur (6) dont l'extrémité est fixée sur la seconde base tournante (5c) de manière à pouvoir tourner autour d'un second axe horizontal (74).

2. Dispositif de peinture selon la revendication 1, **caractérisé en ce qu'**il comprend un second robot supérieur (4) monté de manière à pouvoir se déplacer sur le rail de guidage de déplacement (3) par l'intermédiaire d'une base fixe (53) reliée au rail de guidage de déplacement (3) de manière à pouvoir se déplacer le long du rail de guidage de déplacement (3).

3. Dispositif de peinture selon la revendication 2, **caractérisé en ce que** le second robot supérieur (4) est un robot d'ouverture configuré de manière à ouvrir un capot de moteur de la carrosserie de véhicule automobile et le robot inférieur (6) est un robot de peinture configuré de manière à peindre des surfaces internes du capot de moteur alors que le premier robot supérieur (5) est un robot d'ouverture/ fermeture/ peinture configuré de manière à ouvrir et fermer une portière de la carrosserie de véhicule automobile et à peindre l'intérieur de la portière.

4. Dispositif de peinture selon l'une quelconque des revendications précédentes, **caractérisé en ce que** le châssis de déplacement (16) sur lequel est monté le rail de guidage de déplacement (3) est disposé sur la partie supérieure de la paroi latérale de la cabine de peinture (2) au-dessus de la moitié supérieure de l'objet à peindre.
